(19) Europäisches Patentamt
European Patent Office
Office européen des brevets

(11) **EP 3 411 983 B1**

(12) **EUROPEAN PATENT SPECIFICATION**

(45) Date of publication and mention
of the grant of the patent:
**15.06.2022 Bulletin 2022/24**

(21) Application number: **16753758.8**

(22) Date of filing: **29.07.2016**

(51) International Patent Classification (IPC):
**H04L 5/00** *(2006.01)*          **H04B 7/06** *(2006.01)*
**H04W 72/04** *(2009.01)*          **H04L 25/02** *(2006.01)*

(52) Cooperative Patent Classification (CPC):
**H04L 5/005; H04L 5/0053;** H04L 5/0094;
H04L 25/0224

(86) International application number:
**PCT/US2016/044879**

(87) International publication number:
**WO 2017/135995 (10.08.2017 Gazette 2017/32)**

(54) **RESOURCE ALLOCATIONS FOR BEAMFORMING REFERENCE SIGNALS**

RESSOURCENZUWEISUNGEN FÜR STRAHLFORMUNGSREFERENZSIGNALE

ATTRIBUTIONS DE RESSOURCES POUR DES SIGNAUX DE RÉFÉRENCE À FORMATION DE FAISCEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.02.2016 US 201662290871 P**

(43) Date of publication of application:
**12.12.2018 Bulletin 2018/50**

(73) Proprietor: **Apple Inc.
Cupertino, CA 95014 (US)**

(72) Inventors:
• **XIONG, Gang
Portland, Oregon 97229 (US)**
• **FWU, Jong-Kae
Sunnyvale, California 94087 (US)**
• **ZHANG, Yushu
Beijing 100190 (CN)**
• **CHANG, Wenting
Beijing 100190 (CN)**
• **ZHU, Yuan
Beijing 100012 (CN)**

(74) Representative: **Rooney, John-Paul
Withers & Rogers LLP
2 London Bridge
London SE1 9RA (GB)**

(56) References cited:
**US-A1- 2014 204 851     US-A1- 2014 301 353
US-A1- 2015 103 800**

## Description

## BACKGROUND

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in uplink (UL). Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems, the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

US 2014/0301353 A1 relates to broadcast of information, in particular to broadcast of system information and synchronization signals, enabling access to an eNB, for an LTE New Carrier Type (NCT), subject to Release 12. The suggested solution comprises that the broadcast of system information, and/or synchronization signals, in a cell uses a time-frequency resource that is determined based on one or more properties of the detected synchronization signal(s). Such properties may include a symbol sequence(s) comprised in the synchronization signal(s), the time-frequency resources used for the synchronization signals(s) and/or the scrambling code used on the synchronization signal.

US 2014/0204851 A1 provides techniques and apparatus for enhanced physical broadcast channel (EPBCH) for NCT in LTE. According to certain aspects, a method for wireless communications by a base station (BS) is provided. The method generally includes generating an EPBCH using a frequency division multiplexed (FDM) structure, wherein the EPBCH spans substantially a subframe duration and transmitting the EPBCH.

US 2015/0103800 A1 relates to a terminal's initial access method in a wireless communication system, the method including: obtaining information including a cell identification (ID) from a synchronous signal; and receiving any one of a first physical broadcast channel (PBCH) and a second PBCH channel depending on to which of a preset range the cell ID corresponds.

## SUMMARY

The invention is defined by the subject matter of the independent claims. Advantageous embodiments are subject to the dependent claims. Embodiments not covered by the scope of the independent claims are considered examples useful for understanding this invention.

## BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:

FIG. 1 illustrates a subframe with resource mapping for synchronization signals in accordance with an example;

FIG. 2A is a table of orthogonal cover codes (OCCs) for eight beamforming reference signal (BRS) antenna ports (APs) in accordance with an example;

FIG. 2B is a table of orthogonal cover codes (OCCs) for four beamforming reference signal (BRS) antenna ports (APs) in accordance with an example;

FIG. 3 illustrates a resource allocation for a beamforming reference signal (BRS) transmission using eight beamforming reference signal (BRS) antenna ports (APs) and frequency division multiplexing (FDM) in accordance with an example;

FIG. 4 illustrates a resource allocation for a beamforming reference signal (BRS) transmission using four beamforming reference signal (BRS) antenna ports (APs) and frequency division multiplexing (FDM) in accordance with an example;

FIG. 5 illustrates a resource allocation for a beamforming reference signal (BRS) transmission using eight beamforming reference signal (BRS) antenna ports (APs) and code division multiplexing (CDM) in accordance with an example;

FIG. 6 illustrates a resource allocation for a beamforming reference signal (BRS) transmission using eight beamforming reference signal (BRS) antenna ports (APs) and frequency division multiplexing (FDM) in accordance with an example;

FIG. 7 illustrates a resource allocation for a beamforming reference signal (BRS) transmission using two groups of beamforming reference signal (BRS) antenna ports (APs) and frequency division multiplexing (FDM) or code division multiplexing (CDM) in accordance with an example;

FIG. 8 illustrates a resource allocation for a beamforming reference signal (BRS) transmission using four groups of beamforming reference signal (BRS) antenna ports (APs) and frequency division multiplexing (FDM) or code division multiplexing (CDM) in accordance with an example;

FIG. 9 depicts functionality of an eNodeB operable to perform resource allocations for beamforming reference signal (BRS) transmissions in accordance with an example;

FIG. 10 depicts functionality of a user equipment (UE) operable to process beamforming reference signals (BRS) in accordance with an example;

FIG. 11 depicts a flowchart of a machine readable storage medium having instructions embodied thereon for performing resource allocations for beamforming reference signal (BRS) transmissions at an eNodeB in accordance with an example;

FIG. 12 illustrates a diagram of a wireless device (e.g., UE) and a base station (e.g., eNodeB) in accordance with an example; and

FIG. 13 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

## DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Mobile communication has evolved over the years from early voice systems to today's sophisticated integrated communication platform. Fourth Generation (4G) LTE wireless communication networks are deployed in more than 100 countries to provide services in various spectrum band allocations. The spectrum band allocations can vary depending on a spectrum regime utilized in each country. Recently, development has started on a Fifth Generation (5G) wireless communication system.

High frequency band communication can provide an increased (or wider) bandwidth to support the 5G wireless communication system. Beam forming can be used to implement the high frequency band communication system since beam forming gain can compensate for path loss caused by atmospheric attenuation. In addition, beam forming can improve signal to noise (SNR) ratio and enlarge a coverage area. By aligning a transmission beam to a target user equipment (UE), radiated energy can be focused for increased energy efficiency, and mutual UE interference can be suppressed.

In one example, wireless communication systems can implement synchronization signals. The synchronization signals can include a primary synchronization signal (PSS) and a secondary synchronization signal (SSS). After powering on, a user equipment (UE) can obtain time and frequency synchronization with the network. The UE can use the PSS and SSS to achieve radio frame, subframe, slot and symbol synchronization in a time domain. In addition, the UE can use the PSS and SSS to identify a center bandwidth in a frequency domain, and determine a physical cell identity (PCI).

In one example, 5G wireless communication systems can be designed to implement synchronization signals, beamforming reference signals (BRS) and an enhanced physical broadcast channel (xPBCH). The synchronization signals can include PSS, SSS and an extended synchronization signal (ESS). The PSS and the SSS can be defined in a manner similar to 4G wireless communication systems. The PSS and SSS can each occupy six consecutive physical resource blocks (PRBs). The ESS can provide symbol timing information. For example, at least 12 or 14 sequences can be used to support subframe timing. These sequences can refer to symbols within a subframe, e.g.., 0, 1,...11 or 0, 1,...13. In one example, the ESS can utilize a same sequence as the SSS in 4G wireless communication systems. The ESS can occupy six consecutive PRBs. The BRS can be used to provide beam information to the UE. For example, the BRS can be measured and used to determine a particular beam direction pointed towards a particular UE. The BRS can be distributed, for example, based on the cell ID. The BRS can span an entire band excluding a middle region occupied by the PSS, SSS and ESS. The middle region can include 18 PRBs, which are used for the PSS, SSS and ESS. The middle region can be referred to as a synchronization region.

As discussed in further detail below, the PSS, SSS, ESS and the BRS can be multiplexed with the xPBCH in an OFDM symbol. The multiplexing can be performed in a frequency division multiplexing (FDM) and/or a code division multiplexing (CDM) manner for different beamforming reference signal (BRS) antenna ports. In addition, as described in further detail below, the BRS can be multiplexed with the xPBCH within each OFDM symbol for transmission from an eNodeB to the UE. The BRS can be multiplexed with the xPBCH using an appropriate resource allocation scheme, and then transmitted to the UE.

In one example, as explained in further detail below, different BRS antenna ports can be multiplexed in a CDM and/or FDM manner in order to transmit the BRS to the UE. As an example, K antenna ports (APs) can be defined for the BRS transmission in each OFDM symbol. Depending on a beamforming architecture implemented at the eNodeB, a maximum number of APs available for the BRS transmission in the one OFDM symbol can be defined as $K_{max}$. As non-limiting examples, $K_{max}$ can be defined as 1, 2, 4 or 8.

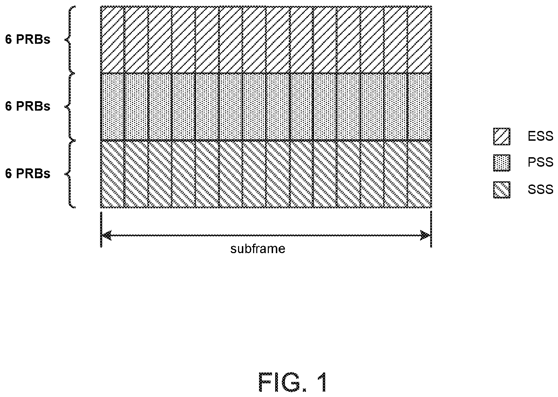

FIG. 1 illustrates an exemplary subframe with resource mapping for synchronization signals. The subframe can be used to transmit primary synchronization signals (PSS), secondary synchronization signals (SSS) and extended synchronization signals (ESS) from an eNodeB to a user equipment (UE). The PSS, SSS and ESS can each span six physical resource blocks (PRBs) within the subframe. Therefore, the PSS, SSS and ESS can span a region of 18 PRBs. In addition, the PSS, SSS and ESS can each span 14 OFDM symbols included in the subframe.

In one example, the ESS can be partly used to transmit symbol timing information to a user equipment (UE). If the ESS utilizes a same sequence as the SSS, the number of sequences for the ESS can be 168. When 12 sequences are used for the ESS for symbol timing purposes, then the remaining number of sequences can be 14 (i.e., 168/12). Alternatively, when 14 sequences are used for the ESS for symbol timing purposes, then the remaining number of sequences can be 12 (i.e., 168/14). The remaining sequences in the ESS can be used for other purposes, such as to provide certain information for beamforming reference signal (BRS) transmissions.

In one configuration, an eNodeB can perform resource allocations for beamforming reference signal (BRS) transmissions. Beamforming reference signal (BRS) antenna ports (APs) can be associated with an OFDM symbol, and the BRS APs can be used to transmit the BRS from the eNodeB to the UE in the OFDM symbol. The number of BRS APs per OFDM symbol can depend on an eNodeB beamforming architecture. The eNodeB can multiplex or interleave the BRS with an xPBCH in the OFDM symbol. The BRS and the xPBCH can be multiplexed or interleaved in the frequency domain. The BRS and the xPBCH can be multiplexed using frequency division multiplexing (FDM) and/or code division multiplexing (CDM). In one example, $N_{xPBCH}$ resource elements (REs) can be allocated for the xPBCH transmission and $N_{BRS}$ REs can be allocated for the BRS transmission. When FDM and/or CDM are used, an orthogonal cover code (OCC) with a length of $K_{max}$ can be applied for the BRS APs, wherein $K_{max}$ is a maximum number of BRS APs available for the BRS transmission in one OFDM symbol. After multiplexing the BRS with the xPBCH, the eNodeB can transmit the BRS multiplexed with the xPBCH in the OFDM symbol.

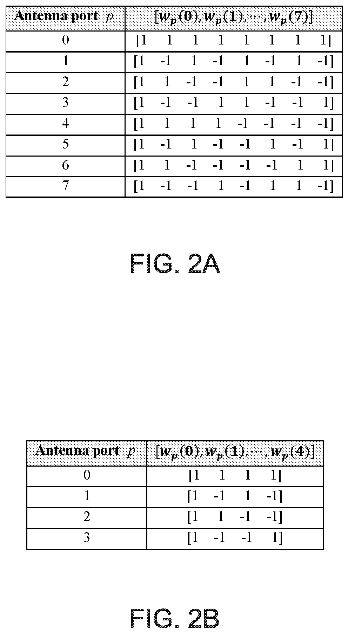

FIG. 2A is a table of exemplary orthogonal cover codes (OCCs) for 8 beamforming reference signal (BRS) antenna ports (APs). The 8 BRS APs can correspond to a $K_{max}$ value of 8, wherein $K_{max}$ is a maximum number of BRS APs available for BRS transmissions between an eNodeB and a user equipment (UE) in an OFDM symbol. When $K_{max}$ is equal to 8, an OCC with length 8 can be applied for the 8 BRS APs. In a specific example, the OCC can utilize Hadamard code.

FIG. 2B is a table of exemplary orthogonal cover codes (OCCs) for 4 beamforming reference signal (BRS) antenna ports (APs). The 4 BRS APs can correspond to a $K_{max}$ value of 4. When $K_{max}$ is equal to 4, an OCC with length 4 can be applied for the 4 BRS APs. In a specific example, the OCC can utilize Hadamard code.

In one example, when a combination of CDM and FDM is applied for the BRS transmission and $K_{max}$ is equal to 8, two APs can form a BRS AP group. Within one BRS AP group, two APs can be multiplexed in a CDM manner. Across AP groups, 4 AP groups can be multiplexed in a CDM manner. In the latter case, an OCC with length 4 can be applied for the 4 AP groups. Typically, one AP group can be from the same analog beamforming direction, where one AP is for vertical polarization and another AP is for horizontal polarization.

In one example, the eNodeB can transmit the ESS to the UE, and the ESS can include information related to BRS transmissions. For example, the ESS can include information on a number of BRS APs and/or information regarding a relationship between transmit (Tx) APs applied on the xPBCH and the BRS.

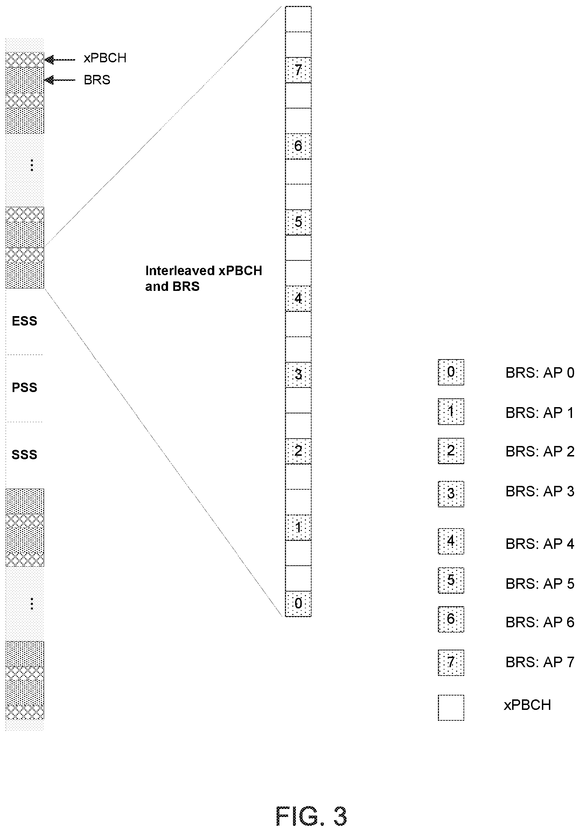

FIG. 3 illustrates an exemplary resource allocation for a beamforming reference signal (BRS) transmission. The BRS can be transmitted from an eNodeB to a user equipment (UE) in an OFDM symbol. The BRS can be transmitted using 8 beamforming reference signal (BRS) antenna ports (APs). In other words, in this example, 8 BRS APs (e.g., AP0 to AP7) can be applied for the BRS transmission. The 8 BRS APs can be allocated and multiplexed (or interleaved) with an enhanced physical broadcast channel (xPBCH) within two physical resource blocks (PRBs). The 8 BRS APs can be multiplexed in a frequency division multiplexing (FDM) manner. In addition, the eNodeB can transmit a primary synchronization signal (PSS), secondary synchronization signal (SSS)

and an enhanced synchronization signal (ESS) to the UE, and the PSS, SSS and ESS can each consume six PRBs.

In one example, the xPBCH multiplexed with the BRS can span two PRBs, which is equal to 24 resource elements (REs). Two REs can be allocated for the xPBCH transmission and one RE can be allocated for the BRS transmission. In other words, one RE for the BRS transmission can be interleaved with two REs for the xPBCH transmission. In this example, the maximum number of BRS APs available for the BRS transmission is 8, so $K_{max}$ is equal to 8.

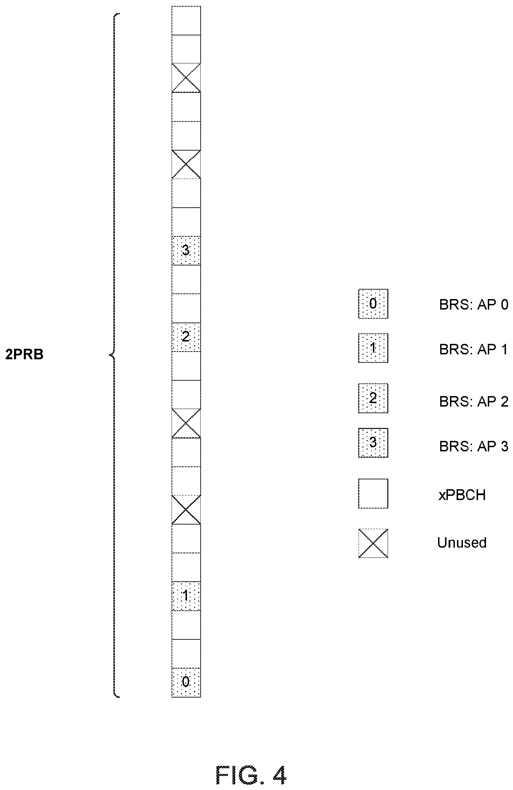

FIG. 4 illustrates an exemplary resource allocation for a beamforming reference signal (BRS) transmission. The BRS can be transmitted from an eNodeB to a user equipment (UE) in an OFDM symbol. The BRS can be transmitted using 4 beamforming reference signal (BRS) antenna ports (APs). In other words, in this example, 4 BRS APs (e.g., AP0 to AP3) can be applied for the BRS transmission. The 4 BRS APs can be allocated and multiplexed (or interleaved) with an enhanced physical broadcast channel (xPBCH) within two physical resource blocks (PRBs). The 4 BRS APs can be multiplexed using frequency division multiplexing (FDM).

In this example, the xPBCH multiplexed with the BRS can span two PRBs, which is equal to 24 resource elements (REs). Two REs can be allocated for the xPBCH transmission and one RE can be allocated for the BRS transmission. In addition, the maximum number of available BRS APs ($K_{max}$) is equal to 8, but based on the eNodeB beamforming architecture, the number of BRS APs (K) actually used is equal to 4. In this case, K is less than $K_{max}$ (or $K < K_{max}$), so remaining resource elements (REs) allocated for the BRS transmission are not used. The remaining number of REs that are unused is equal to $K_{max} - K$. In this example, 4 REs allocated for the BRS transmission are not used (as shown in FIG. 4).

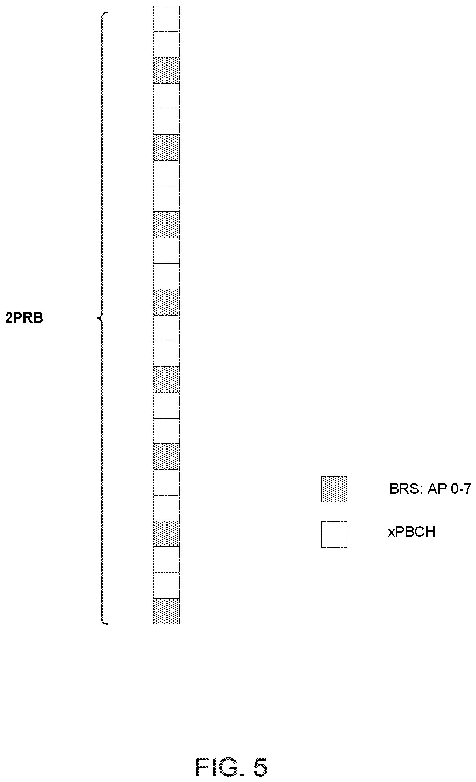

FIG. 5 illustrates an exemplary resource allocation for a beamforming reference signal (BRS) transmission. The BRS can be transmitted from an eNodeB to a user equipment (UE) in an OFDM symbol. The BRS can be transmitted using 8 beamforming reference signal (BRS) antenna ports (APs). In other words, in this example, 8 BRS APs (e.g., AP 0-7) can be applied for the BRS transmission. The 8 BRS APs can be allocated and multiplexed (or interleaved) with an enhanced physical broadcast channel (xPBCH) within two physical resource blocks (PRBs), which is equal to 24 resource elements (REs). Two REs can be allocated for the xPBCH transmission and one RE can be allocated for the BRS transmission. In addition, as shown in FIG. 5, the 8 BRS APs can be multiplexed using code division multiplexing (CDM). The 8 BRS APs can have a same resource allocation, but the 8 BRS APs can be differentiated by different orthogonal cover codes (OCCs).

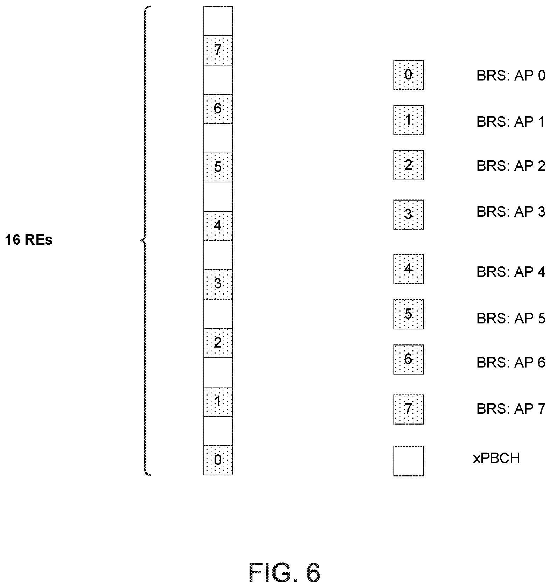

FIG. 6 illustrates an exemplary resource allocation for a beamforming reference signal (BRS) transmission. The BRS can be transmitted from an eNodeB to a user equipment (UE) in an OFDM symbol. The BRS can be transmitted using 8 beamforming reference signal (BRS) antenna ports (APs). In other words, in this example, 8 BRS APs (e.g., AP 0-7) can be applied for the BRS transmission. The 8 BRS APs can be allocated and multiplexed (or interleaved) with an enhanced physical broadcast channel (xPBCH) within 16 resource elements (REs). One RE can be allocated for the xPBCH transmission and one RE can be allocated for the BRS transmission. In addition, as shown in FIG. 6, the 8 BRS APs can be multiplexed using frequency division multiplexing (FDM). Alternatively, the 8 BRS APs can be multiplexed using CDM (not shown).

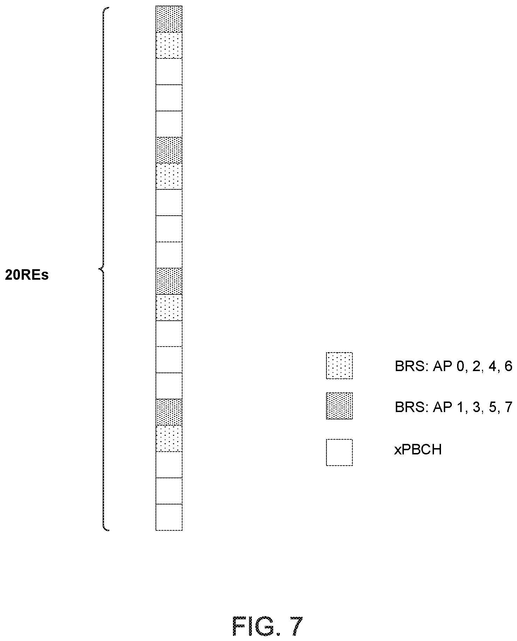

FIG. 7 illustrates an exemplary resource allocation for a beamforming reference signal (BRS) transmission. The BRS can be transmitted from an eNodeB to a user equipment (UE) in an OFDM symbol. The BRS can be transmitted using 8 beamforming reference signal (BRS) antenna ports (APs). The 8 BRS APs can be split into two groups - a first BRS AP group can include AP 0/2/4/6 and a second BRS AP group can include AP 1/3/5/7. The 8 BRS APs can be allocated and multiplexed (or interleaved) with an enhanced physical broadcast channel (xPBCH) within 20 resource elements (REs). In this example, three REs can be allocated for the xPBCH transmission and one RE can be allocated for the BRS transmission, but these values are not intended to be limiting.

In this example, code division multiplexing (CDM) and/or frequency division multiplexing (FDM) can be applied for the 8 BRS APs. More specifically, orthogonal cover codes (OCCs) of length 4 can be applied on AP 0/2/4/6 and AP 1/3/5/7, respectively. Therefore, the BRS APs in the different groups can be differentiated by the OCC of length 4.

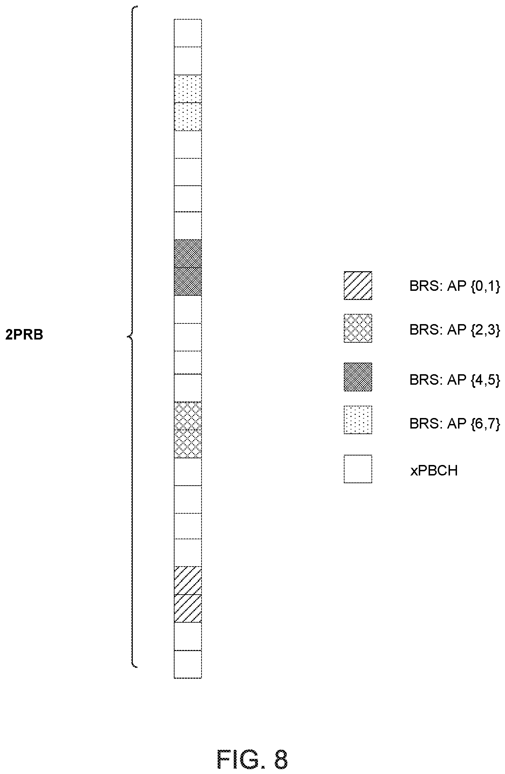

FIG. 8 illustrates an exemplary resource allocation for a beamforming reference signal (BRS) transmission. The BRS can be transmitted from an eNodeB to a user equipment (UE) in an OFDM symbol. The BRS can be transmitted using 8 beamforming reference signal (BRS) antenna ports (APs). The 8 BRS APs can be split into four groups - a first BRS AP group can include AP {0,1}, a second BRS AP group can include AP {2,3}, a third BRS AP group can include AP {4,5} and a fourth BRS AP group can include AP {6,7}. The 8 BRS APs can be allocated and multiplexed (or interleaved) with an enhanced physical broadcast channel (xPBCH) within two physical resource blocks (PRBs), which is equal to 24 resource elements (REs). In this example, four REs can be allocated for the xPBCH transmission and two REs can be allocated for the BRS transmission.

In this example, code division multiplexing (CDM) and/or frequency division multiplexing (FDM) can be applied for the 8 BRS APs. More specifically, an orthogonal cover code (OCC) of length 4 can be applied to each of the four BRS AP groups. In addition, if the number of BRS APs is less than 8 (e.g., 4 BRS APs are used), then REs reserved for BRS AP {4,5} and {6,7} can be used by BRS AP {0,1} and {2,3}.

In one configuration, scrambling can be used to randomize interference for xPBCH transmissions. Since the ESS can be used to provide symbol timing information, a scrambling seed (or scrambling sequence) can be initialized for the xPBCH transmission. The scrambling seed can be initialized as a function of the physical cell ID and the symbol index, which can function to further randomize the interference. In specific examples, the scrambling seed ($c_{init}$) can be given by:

$$c_{init} = f(N_{cell}^{ID}, n_{sym})$$ or

$$c_{init} = \left(n_{sym} + 1\right) \cdot \left(2N_{cell}^{ID} + 1\right)$$, wherein $N_{cell}^{ID}$ is the physical cell ID, $n_{sym}$ is the symbol index, and f is a function of the physical cell ID and the symbol index.

In one configuration, in a Fifth Generation (5G) wireless communication system, an eNodeB can transmit a beamforming reference signal (BRS) to a user equipment (UE) using multiple BRS antenna ports in one OFDM symbol. The eNodeB can transmit an enhanced physical broadcast channel (xPBCH) in the same OFDM symbol, and the xPBCH can be multiplexed with the BRS in a frequency division multiplexing (FDM) manner.

In one example, information on a number of BRS antenna ports can be carried in an enhanced synchronization signal (ESS) transmitted from the eNodeB to the UE. In addition, the ESS can include information regarding a relationship between transmit (Tx) APs applied on the xPBCH and the BRS.

In one example, multiple BRS APs can be multiplexed in a frequency division multiplexing (FDM) and/or a code division multiplexing (CDM) manner.

In one example, when a CDM based multiplexing scheme is employed, an orthogonal cover code (OCC) with length of $K_{max}$ can be applied, wherein $K_{max}$ is a maximum number of APs available for BRS transmission. In one specific example, Hadamard code can be applied as the OCC.

In one example, when an FDM based multiplexing scheme is employed, remaining resource elements (REs) on ($K_{max}$ - K) BRS APs can be used when K < $K_{max}$, wherein K is a number of BRS APs and $K_{max}$ is a maximum number of APs available for BRS transmission.

In one example, when a combination of CDM and FDM is applied for the BRS transmission and $K_{max}$ is equal to 8, two APs an form a BRS AP group. Within one BRS AP group, two APs can be multiplexed in an FDM manner. Across AP groups, four AP groups can be multiplexed in a CDM manner.

In one example, when a combination of CDM and FDM is applied for the BRS transmission and $K_{max}$ is equal to 8, two APs an form a BRS AP group. Within one BRS AP group, two APs can be multiplexed in a CDM manner with an orthogonal cover code (OCC) of length 2. Across AP groups, four AP groups can be multiplexed in an FDM manner.

In one configuration, a scrambling sequence can be initialized for the transmission of the xPBCH. The scrambling sequence can be initialized as a function of a physical cell ID and a symbol index. In specific examples, the scrambling seed can be given by:

$$c_{init} = f(N_{cell}^{ID}, n_{sym})$$ or

$$c_{init} = \left(n_{sym} + 1\right) \cdot \left(2N_{cell}^{ID} + 1\right)$$, wherein $N_{cell}^{ID}$ is the physical cell ID and $n_{sym}$ is the symbol index.

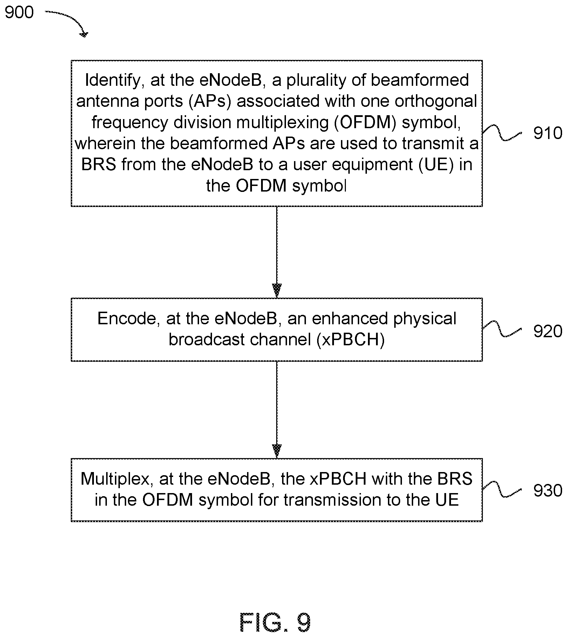

Another example provides functionality 900 of an eNodeB operable to perform resource allocations for beamforming reference signal (BRS) transmissions, as shown in FIG. 9. The eNodeB can comprise one or more processors and memory configured to: identify, at the eNodeB, a plurality of BRS antenna ports (APs) associated with one orthogonal frequency division multiplexing (OFDM) symbol, wherein the BRS APs are used to transmit a BRS from the eNodeB to a user equipment (UE) in the OFDM symbol, as in block 910. The eNodeB can comprise one or more processors and memory configured to: encode, at the eNodeB, an enhanced physical broadcast channel (xPBCH), as in block 920. The eNodeB can comprise one or more processors and memory configured to: multiplex, at the eNodeB, the xPBCH with the BRS in the OFDM symbol for transmission to the UE, as in block 930.

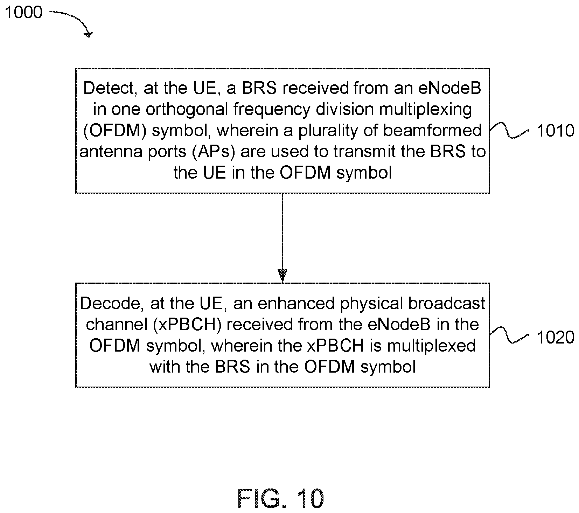

Another example provides functionality 1000 of a user equipment (UE) operable to process beamforming reference signals (BRS), as shown in FIG. 10. The UE can comprise one or more processors and memory configured to: detect, at the UE, a BRS received from the eNodeB in one orthogonal frequency division multiplexing (OFDM) symbol, wherein a plurality of BRS antenna ports (APs) are used to transmit the BRS to the UE in the OFDM symbol, as in block 1010. The UE can comprise one or more processors and memory configured to: decode, at the UE, an enhanced physical broadcast channel (xPBCH) received from the eNodeB in the OFDM symbol, wherein the xPBCH is multiplexed with the BRS in the OFDM symbol, as in block 1020.

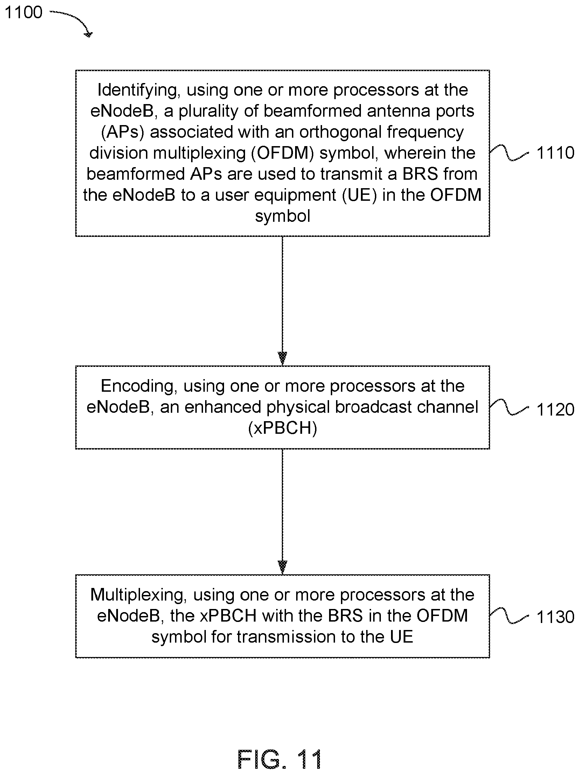

Another example provides at least one machine readable storage medium having instructions 1100 embodied thereon for performing resource allocations for beamforming reference signal (BRS) transmissions at an eNodeB, as shown in FIG. 11. The instructions can be executed on a machine, where the instructions are included on at least one computer readable medium or one non-transitory machine readable storage medium. The instructions when executed perform: identifying, using one or more processors at the eNodeB, a plurality of BRS antenna ports (APs) associated with an orthogonal frequency division multiplexing (OFDM) symbol, wherein the BRS APs are used to transmit a BRS from the eNodeB to a user equipment (UE) in the OFDM symbol, as in block 1110. The instructions when executed perform: encoding, using one or more processors at the eNodeB, an enhanced physical broadcast channel (xPBCH), as in block 1120. The instructions when executed perform: multiplexing, using one or more processors at the eNodeB, the xPBCH with the BRS in the OFDM symbol for transmission to the UE, as in block 1130.

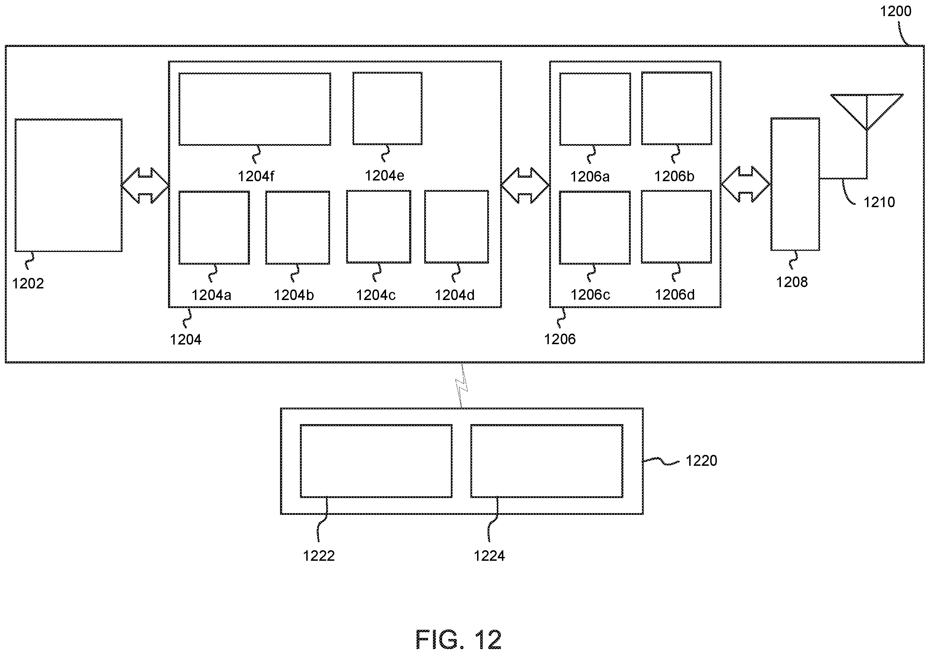

FIG. 12 provides an example illustration of a user equipment (UE) device 1200 and a node 1220. The UE device 1200 can include a wireless device, a mobile station (MS), a mobile wireless device, a mobile communication device, a tablet, a handset, or other type of wireless device. The UE device 1200 can include one or more antennas configured to communicate with the node 1220 or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The node 1220 can include one or more processors 1222 and memory 1224. The node 1220 can include a transceiver (not shown). The UE device 1200 can be configured to communicate using at least one wireless communication standard including 3GPP LTE, WiMAX, High Speed Packet Access (HSPA), Bluetooth, and WiFi. The UE device 1200 can communicate using separate antennas for each wireless communication standard or shared antennas for multiple wireless communication standards. The UE device 1200 can communicate in a wireless local area network (WLAN), a wireless personal area network (WPAN), and/or a WWAN.

In some embodiments, the UE device 1200 may include application circuitry 1202, baseband circuitry 1204, Radio Frequency (RF) circuitry 1206, front-end module (FEM) circuitry 1208 and one or more antennas 1210, coupled together at least as shown. In addition, the node 1220 may include, similar to that described for the UE device 1200, application circuitry, baseband circuitry, Radio Frequency (RF) circuitry, front-end module (FEM) circuitry and one or more antennas

The application circuitry 1202 may include one or more application processors. For example, the application circuitry 1202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include a storage medium, and may be configured to execute instructions stored in the storage medium to enable various applications and/or operating systems to run on the system.

The baseband circuitry 1204 may include circuitry such as, but not limited to, one or more single-core or multi-core processors. The baseband circuitry 1204 may include one or more baseband processors and/or control logic to process baseband signals received from a receive signal path of the RF circuitry 1206 and to generate baseband signals for a transmit signal path of the RF circuitry 1206. Baseband processing circuitry 1204 may interface with the application circuitry 1202 for generation and processing of the baseband signals and for controlling operations of the RF circuitry 1206. For example, in some embodiments, the baseband circuitry 1204 may include a second generation (2G) baseband processor 1204a, third generation (3G) baseband processor 1204b, fourth generation (4G) baseband processor 1204c, and/or other baseband processor(s) 1204d for other existing generations, generations in development or to be developed in the future (e.g., fifth generation (5G), 6G, etc.). The baseband circuitry 1204 (e.g., one or more of baseband processors 1204a-d) may handle various radio control functions that enable communication with one or more radio networks via the RF circuitry 1206. The radio control functions may include, but are not limited to, signal modulation/demodulation, encoding/decoding, radio frequency shifting, etc. In some embodiments, modulation/demodulation circuitry of the baseband circuitry 1204 may include Fast-Fourier Transform (FFT), precoding, and/or constellation mapping/demapping functionality. In some embodiments, encoding/decoding circuitry of the baseband circuitry 1204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1204 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1204e of the baseband circuitry 1204 may be configured to run elements of the protocol stack for signaling of the PHY, MAC, RLC, PDCP and/or RRC layers. In some embodiments, the baseband circuitry may include one or more audio digital signal processor(s) (DSP) 1204f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1204 and the application circuitry 1202 may be implemented together such as, for example, on a system on a chip (SOC).

In some embodiments, the baseband circuitry 1204 may provide for communication compatible with one or more radio technologies. For example, in some embodiments, the baseband circuitry 1204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1204 is configured to support radio communications of more than one wireless protocol may be referred to as multi-mode baseband circuitry.

The RF circuitry 1206 may enable communication with wireless networks using modulated electromagnetic radiation through a non-solid medium. In various embodiments, the RF circuitry 1206 may include switches, filters, amplifiers, etc. to facilitate the communication with the wireless network. RF circuitry 1206 may include a receive signal path which may include circuitry to down-convert RF signals received from the FEM circuitry 1208 and provide baseband signals to the baseband circuitry 1204. RF circuitry 1206 may also include a transmit signal path which may include circuitry to up-convert baseband signals provided by the baseband circuitry 1204 and provide RF output signals to the FEM circuitry 1208 for transmission.

In some embodiments, the RF circuitry 1206 may include a receive signal path and a transmit signal path. The receive signal path of the RF circuitry 1206 may include mixer circuitry 1206a, amplifier circuitry 1206b and filter circuitry 1206c. The transmit signal path of the RF circuitry 1206 may include filter circuitry 1206c and mixer circuitry 1206a. RF circuitry 1206 may also include synthesizer circuitry 1206d for synthesizing a frequency for use by the mixer circuitry 1206a of the receive signal path and the transmit signal path. In some embodiments, the mixer circuitry 1206a of the receive signal path may be configured to down-convert RF signals received from the FEM circuitry 1208 based on the synthesized frequency provided by synthesizer circuitry 1206d. The amplifier circuitry 1206b may be configured to amplify the down-converted signals and the filter circuitry 1206c may be a low-pass filter (LPF) or band-pass filter (BPF) configured to remove unwanted signals from the down-converted signals to generate output baseband signals. Output baseband signals may be provided to the baseband circuitry 1204 for further processing. In some embodiments, the output baseband signals may be zero-frequency baseband signals, although this is not a necessity. In some embodiments, mixer circuitry 1206a of the receive signal path may comprise passive mixers, although the scope of the embodiments is not limited in this respect.

In some embodiments, the mixer circuitry 1206a of the transmit signal path may be configured to up-convert input baseband signals based on the synthesized frequency provided by the synthesizer circuitry 1206d to generate RF output signals for the FEM circuitry 1208. The baseband signals may be provided by the baseband circuitry 1204 and may be filtered by filter circuitry 1206c. The filter circuitry 1206c may include a low-pass filter (LPF), although the scope of the embodiments is not limited in this respect.

In some embodiments, the mixer circuitry 1206a of the receive signal path and the mixer circuitry 1206a of the transmit signal path may include two or more mixers and may be arranged for quadrature down-conversion and/or up-conversion respectively. In some embodiments, the mixer circuitry 1206a of the receive signal path and the mixer circuitry 1206a of the transmit signal path may include two or more mixers and may be arranged for image rejection (e.g., Hartley image rejection). In some embodiments, the mixer circuitry 1206a of the receive signal path and the mixer circuitry 1206a may be arranged for direct down-conversion and/or direct up-conversion, respectively. In some embodiments, the mixer circuitry 1206a of the receive signal path and the mixer circuitry 1206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1206 may include analog-to-digital converter (ADC) and digital-to-analog converter (DAC) circuitry and the baseband circuitry 1204 may include a digital baseband interface to communicate with the RF circuitry 1206.

In some dual-mode embodiments, a separate radio IC circuitry may be provided for processing signals for each spectrum, although the scope of the embodiments is not limited in this respect.

In some embodiments, the synthesizer circuitry 1206d may be a fractional-N synthesizer or a fractional N/N+1 synthesizer, although the scope of the embodiments is not limited in this respect as other types of frequency synthesizers may be suitable. For example, synthesizer circuitry 1206d may be a delta-sigma synthesizer, a frequency multiplier, or a synthesizer comprising a phase-locked loop with a frequency divider.

The synthesizer circuitry 1206d may be configured to synthesize an output frequency for use by the mixer circuitry 1206a of the RF circuitry 1206 based on a frequency input and a divider control input. In some embodiments, the synthesizer circuitry 1206d may be a fractional N/N+1 synthesizer.

In some embodiments, frequency input may be provided by a voltage controlled oscillator (VCO), although that is not a necessity. Divider control input may be provided by either the baseband circuitry 1204 or the applications processor 1202 depending on the desired output frequency. In some embodiments, a divider control input (e.g., N) may be determined from a look-up table based on a channel indicated by the applications processor 1202.

Synthesizer circuitry 1206d of the RF circuitry 1206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1206 may include an IQ/polar converter.

FEM circuitry 1208 may include a receive signal path which may include circuitry configured to operate on RF signals received from one or more antennas 1210, amplify the received signals and provide the amplified versions of the received signals to the RF circuitry 1206 for further processing. FEM circuitry 1208 may also include a transmit signal path which may include circuitry configured to amplify signals for transmission provided by the RF circuitry 1206 for transmission by one or more of the one or more antennas 1210.

In some embodiments, the FEM circuitry 1208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1206). The transmit signal path of the FEM circuitry 1208 may include a power amplifier (PA) to amplify input RF signals (e.g., provided by RF circuitry 1206), and one or more filters to generate RF signals for subsequent transmission (e.g., by one or more of the one or more antennas 1210.

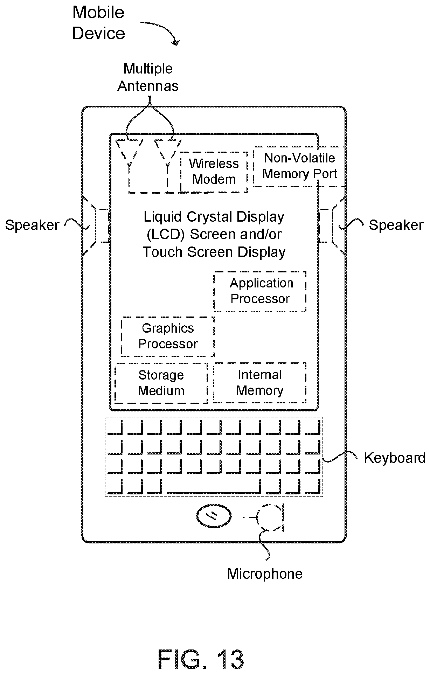

FIG. 13 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 13 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology. The invention is solely defined by the appended claims 1-15.

## Claims

1. An apparatus for use in an eNodeB operable to perform resource allocations for beamforming reference signal, BRS, transmissions within a 5G wireless communication system, the apparatus comprising one or more processors and memory configured to:

   identify, at the eNodeB, a plurality of BRS antenna ports, APs, associated with one orthogonal frequency division multiplexing, OFDM, symbol, wherein the BRS APs are used to transmit a BRS from the eNodeB to a user equipment, UE, in the OFDM symbol;
   encode, at the eNodeB, an enhanced physical broadcast channel, xPBCH, and

multiplex, at the eNodeB, the xPBCH, the BRS, a primary synchronization signal, PSS, a secondary synchronization signal, SSS, and an enhanced synchronization signal, ESS, in the OFDM symbol in a frequency division multiplexing, FDM, and/or a code division multiplexing, CDM, manner for transmission to the UE.

2. The apparatus of claim 1, further comprising a transceiver configured to: transmit, to the UE, the BRS using the plurality of BRS APs associated with the OFDM symbol; and
transmit, to the UE, the xPBCH in the OFDM symbol, wherein the xPBCH is multiplexed with the BRS in the OFDM symbol.

3. The apparatus of claim 1, wherein the BRS facilitates the UE determining a particular beam direction pointed towards the UE.

4. The apparatus of claim 1, wherein the ESS includes information on a number of BRS APs associated with the OFDM symbol.

5. The apparatus of claim 1, wherein the ESS includes information regarding a relationship between transmit, Tx, antenna ports, AP, applied on the xPBCH and the BRS.

6. The apparatus of claim 1, wherein resource elements, REs, are unused for a number of BRS APs equal to $(K_{max} - K)$ when $K < K_{max}$ and the BRS APs are multiplexed using frequency division multiplexing, FDM, or code division multiplexing, CDM, wherein $K_{max}$ is a maximum number of BRS APs available for transmission of the BRS in the OFDM symbol and K is an actual number of BRS APs used for transmission of the BRS.

7. The apparatus of claim 1, wherein the one or more processors and memory are further configured to:

- apply an orthogonal cover code, OCC, with a length of $K_{max}$ for the BRS APs when the BRS APs are multiplexed using code division multiplexing, CDM, wherein $K_{max}$ is a maximum number of BRS APs available for transmission of the BRS in the OFDM symbol; or
- apply an orthogonal cover code, OCC, with length 8 for the BRS APs when the BRS APs are multiplexed using code division multiplexing, CDM, or
- organize a group of BRS APs into a first BRS AP sub-group and a second BRS AP sub-group, wherein an orthogonal cover code, OCC, with length 4 is applied to the first BRS AP sub-group and the second BRS AP sub-group, wherein a combination of code division multiplexing, CDM, and frequency division multiplexing, FDM, is applied for the group of BRS APs, or
- organize a group of BRS APs into four BRS AP sub-groups, wherein an orthogonal cover code, OCC, with length 2 is applied to each BRS AP sub-group, wherein a combination of code division multiplexing, CDM, and frequency division multiplexing, FDM, is applied for the group of BRS APs.

8. The apparatus of claim 1, wherein the one or more processors and memory are further configured to: initialize a scrambling sequence for transmission of the xPBCH, wherein the scrambling sequence is a function of a physical cell identifier, ID, and a symbol index, wherein a scrambling seed for the scrambling sequence is defined as: > wherein $N^{\wedge}u$ is the physical cell ID, $n_{sym}$ is the symbol index and f is a function of the physical cell ID and the symbol index.

9. The apparatus of claim 8, wherein the scrambling seed is defined as:

$$c_{init} = \left(n_{sym} + 1\right) \cdot \left(2N_{cell}^{ID} + 1\right).$$

10. An apparatus of a user equipment, UE, operable to process beamforming reference signals, BRS, within a 5G wireless communication system, the apparatus comprising one or more processors and memory configured to:

detect, at the UE, a BRS received from an eNodeB in one orthogonal frequency division multiplexing, OFDM, symbol of a subframe, wherein a plurality of BRS antenna ports, APs, are used to transmit the BRS to the UE in the OFDM symbol; and
decode, at the UE, an enhanced physical broadcast channel, xPBCH, received from the eNodeB in the OFDM symbol, wherein the xPBCH, the BRS, a primary synchronization signal, PSS, a secondary synchronization signal, SSS, and an enhanced synchronization signal, ESS, are multiplexed in the OFDM symbol in a frequency division multiplexing, FDM, and/or a code division multiplexing, CDM, manner.

11. The apparatus of claim 10, further comprising a transceiver configured to:

receive, from the eNodeB, the BRS in the OFDM symbol using the plurality of BRS APs; and
receive, from the eNodeB, the xPBCH multiplexed with the BRS in the OFDM symbol.

12. The apparatus of claim 10 or 11, wherein the ESS includes information on a number of BRS APs associated with the OFDM symbol.

13. The apparatus of one of claims 10 to 12, wherein a scrambling sequence is initialized for reception of the xPBCH at the UE, wherein the scrambling sequence is a function of a physical cell identifier, ID, and a symbol index, wherein a scrambling seed for the scrambling sequence is defined as:

$$c_{init} = f(N_{cell}^{ID}, n_{sym})$$, wherein $N_{cell}^{ID}$ is the physical cell ID, $n_{sym}$ is the symbol index, and f is a function of the physical cell ID and the symbol index.

14. At least one machine readable storage medium having instructions embodied thereon that, when executed by one or more processors of an eNodeB, cause the eNodeB to perform resource allocations for beamforming reference signal, BRS, transmissions within a 5G wireless communication system by:

identifying a plurality of BRS antenna ports, APs, associated with an orthogonal frequency division multiplexing, OFDM, symbol, wherein the BRS APs are used to transmit a BRS from the eNodeB to a user equipment, UE, in the OFDM symbol;
encoding an enhanced physical broadcast channel, xPBCH, and
multiplexing the xPBCH, the BRS, a primary synchronization signal, PSS, a secondary synchronization signal, SSS, and an enhanced synchronization signal, ESS, in in the OFDM symbol in a frequency division multiplexing, FDM, and/or a code division multiplexing, CDM, manner.

15. At least one machine readable storage medium having instructions embodied thereon that, when executed by one or more processors of a user equipment, UE, cause the UE to process beamforming reference signals, BRS, within a 5G wireless communication system, by:

detecting, at the UE, a BRS received from an eNodeB in one orthogonal frequency division multiplexing, OFDM, symbol of a subgframe, wherein a plurality of BRS antenna ports, APs, are used to transmit the BRS to the UE in the OFDM symbol; and
decoding, at the UE, an enhanced physical broadcast channel, xPBCH, received from the eNodeB in the OFDM symbol, wherein the xPBCH, the BRS, a primary synchronization signal, PSS, a secondary synchronization signal, SSS, and an enhanced synchronization signal, ESS, are
multiplexed in said subframe, wherein the xPBCH and the BRS are multiplexed in the OFDM symbol.

**Patentansprüche**

1. Vorrichtung zur Verwendung in einem eNodeB, betreibbar zum Durchführen von Ressourcenzuweisungen für Strahlformungsreferenzsignal, BRS, -Übertragungen innerhalb eines drahtlosen 5G-Kommunikationssystems, die Vorrichtung umfassend einen oder mehrere Prozessoren und Speicher, die konfiguriert sind zum:

Identifizieren, an dem eNodeB, einer Vielzahl von BRS-Antennenports, APs, die mit einem orthogonalen Frequenzmultiplex, OFDM, -Symbol verknüpft sind, wobei die BRS-APs verwendet werden, um ein BRS von dem eNodeB zu einem Benutzergerät, UE, in dem OFDM-Symbol zu übertragen;
Kodieren, an dem eNodeB, eines erweiterten Physical Broadcast Channel, xPBCH, und
Multiplexen, an dem eNodeB, des xPBCH, des BRS, eines primären Synchronisationssignals, PSS, eines sekundären Synchronisationssignals, SSS, und eines erweiterten Synchronisationssignals, ESS, in dem OFDM-Symbol in einer Frequenzmultiplex, FDM, und/oder einer Codemultiplex, CDM, -Weise zur Übertragung an das UE.

2. Vorrichtung nach Anspruch 1, ferner umfassend einen Sender-Empfänger, der konfiguriert ist zum:

Übertragen, an das UE, des BRS unter Verwenden der Vielzahl von BRS-APs, die mit dem OFDM-Symbol verknüpft sind; und
Übertragen, an das UE, des xPBCH in dem OFDM-Symbol, wobei der xPBCH mit dem BRS in dem OFDM-Symbol gemultiplext wird.

3. Vorrichtung nach Anspruch 1, wobei der BRS es erleichtert, dass das UE eine besondere Strahlrichtung bestimmt, die auf das UE gerichtet ist.

4. Vorrichtung nach Anspruch 1, wobei das ESS Information über eine Anzahl von BRS-APs beinhaltet, die mit dem OFDM-Symbol verknüpft sind.

5. Vorrichtung nach Anspruch 1, wobei das ESS Information bezüglich einer Beziehung zwischen Übertragungs, Tx, -Antennenports, AP, angewandt auf den xPBCH und den BRS beinhaltet.

6. Vorrichtung nach Anspruch 1, wobei Ressourcenelemente, REs, für eine Anzahl von BRS-APs unbenutzt sind, die gleich ($K_{max}$ - K) ist, wenn K < $K_{max}$ ist, und die BRS-APs unter Verwenden von Frequenzmultiplex, FDM, oder Codemultiplex, CDM, gemultiplext werden, wobei $K_{max}$ eine maximale Anzahl von BRS-APs ist, die für Übertragung des BRS in dem OFDM-Symbol verfügbar sind, und K eine tatsächliche Anzahl von BRS-APs ist, die für Übertragung des BRS verwendet werden.

7. Vorrichtung nach Anspruch 1, wobei der eine oder die mehreren Prozessoren und der Speicher ferner konfiguriert sind zum:

     - Anwenden eines orthogonalen Abdeckungscodes, OCC, mit einer Länge von $K_{max}$ für die BRS-APs, wenn die BRS-APs unter Verwenden von Codemultiplex, CDM, gemultiplext werden, wobei $K_{max}$ eine maximale Anzahl von BRS-APs ist, die für Übertragung des BRS in dem OFDM-Symbol verfügbar sind; oder

     - Anwenden eines orthogonalen Abdeckungscodes, OCC, mit der Länge 8 für die BRS-APs, wenn die BRS-APs unter Verwenden von Codemultiplex, CDM, gemultiplext werden, oder

     - Organisieren einer Gruppe von BRS-APs in eine erste BRS-AP-Untergruppe und eine zweite BRS-AP-Untergruppe, wobei ein orthogonaler Abdeckungscode, OCC, mit der Länge 4 auf die erste BRS-AP-Untergruppe und die zweite BRS-AP-Untergruppe angewendet wird, wobei eine Kombination von Codemultiplex, CDM, und Frequenzmultiplex, FDM, für die Gruppe von BRS-APs angewendet wird, oder

     - Organisieren einer Gruppe von BRS-APs in vier BRS-AP-Untergruppen, wobei ein orthogonaler Abdeckungscode, OCC, mit der Länge 2 auf jede BRS-AP-Untergruppe angewendet wird, wobei eine Kombination von Codemultiplex, CDM, und Frequenzmultiplex, FDM, für die Gruppe von BRS-APs angewendet wird.

8. Vorrichtung nach Anspruch 1, wobei der eine oder die mehreren Prozessoren und der Speicher ferner konfiguriert sind zum: Initialisieren einer Verwürfelungssequenz für Übertragung des xPBCH, wobei die Verwürfelungssequenz eine Funktion einer physikalischen Zellkennung, ID, und eines Symbolindexes ist, wobei ein Verwürfelungskeim für die Verwürfelungssequenz definiert ist als: $c_{init} = f(N_{cell}^{ID}, n_{sym})$, wobei $N_{cell}^{ID}$ die physikalische Zellkennung ist, $n_{sym}$ der Symbolindex ist und f eine Funktion der physikalischen Zellkennung und des Symbolindexes ist.

9. Vorrichtung nach Anspruch 8, wobei der Verwürfelungskeim definiert ist als:

$$c_{init} = (n_{sym} + 1) \cdot (2N_{cell}^{ID} + 1).$$

10. Vorrichtung eines Benutzergerätes, UE, betreibbar zum Verarbeiten von Strahlformungsreferenzsignalen, BRS, innerhalb eines drahtlosen 5G-Kommunikationssystems, die Vorrichtung umfassend einen oder mehrere Prozessoren und Speicher, die konfiguriert sind zum:

     Erfassen, an dem UE, eines BRS, das von einem eNodeB in einem orthogonalen Frequenzmultiplex, OFDM, -Symbol eines Unterrahmens empfangen wird, wobei eine Vielzahl von BRS-Antennenports, APs, verwendet wird, um das BRS an das UE in dem OFDM-Symbol zu übertragen; und

     Dekodieren, an dem UE, eines erweiterten Physical Broadcast Channel, xPBCH, der von dem eNodeB in dem OFDM-Symbol empfangen wird, wobei der xPBCH, das BRS, ein primäres Synchronisationssignal, PSS, ein sekundäres Synchronisationssignal, SSS, und ein erweitertes Synchronisationssignal, ESS, in dem OFDM-Symbol in einer Frequenzmultiplex, FDM, und/oder einer Codemultiplex, CDM, -Weise gemultiplext werden.

11. Vorrichtung nach Anspruch 10, ferner umfassend einen Sender-Empfänger, der konfiguriert ist zum:

     Empfangen, von dem eNodeB, des BRS in dem OFDM-Symbol unter Verwenden der Vielzahl von BRS-APs; und

     Empfangen, von dem eNodeB, des xPBCH, der mit dem BRS in dem OFDM-Symbol gemultiplext ist.

12. Vorrichtung nach Anspruch 10 oder 11, wobei das ESS Information über eine Anzahl von BRS-APs beinhaltet, die mit dem OFDM-Symbol verknüpft sind.

13. Vorrichtung nach einem der Ansprüche 10 bis 12, wobei eine Verwürfelungssequenz für Empfang des xPBCH an dem UE initialisiert wird, wobei die Verwürfelungssequenz eine Funktion einer physikalischen Zellkennung, ID, und eines Symbolindexes ist, wobei ein Verwürfelungskeim für die Verwürfelungssequenz definiert ist als: $c_{init} = f(N_{cell}^{ID}, n_{sym})$, wobei $N_{cell}^{ID}$ die physikalische Zellkennung ist, $n_{sym}$ der Symbolindex ist und f eine Funktion der physikalischen Zellkennung und des Symbolindexes ist.

**14.** Mindestens ein maschinenlesbares Speichermedium aufweisend darauf verkörperte Anweisungen, die, wenn sie von einem oder mehreren Prozessoren eines eNodeB ausgeführt werden, den eNodeB veranlassen, Ressourcenzuweisungen für Strahlformungsreferenzsignal, BRS, -Übertragungen innerhalb eines drahtlosen 5G Kommunikationssystems durchzuführen, durch:

Identifizieren einer Vielzahl von BRS-Antennenports, APs, die mit einem orthogonalen Frequenzmultiplex, OFDM, Symbol verknüpft sind, wobei die BRS-APs verwendet werden zum Übertragen eines BRS von dem eNodeB zu einem Benutzergerät, UE, in dem OFDM-Symbol; Kodieren eines erweiterten Physical Broadcast Channel, xPBCH, und Multiplexen des xPBCH, des BRS, eines primären Synchronisationssignals, PSS, eines sekundären Synchronisationssignals, SSS, und eines erweiterten Synchronisationssignals, ESS, in dem OFDM-Symbol in einer Frequenzmultiplex, FDM, und/oder einer Codemultiplex, CDM, -Weise.

**15.** Mindestens ein maschinenlesbares Speichermedium ausweisend darauf verkörperte Anweisungen, die, wenn sie durch einen oder mehrere Prozessoren eines Benutzergeräts, UE, ausgeführt werden, das UE veranlassen, Strahlformungsreferenzsignale, BRS, innerhalb eines drahtlosen 5G-Kommunikationssystems zu verarbeiten, durch:

Erfassen, an dem UE, eines BRS, das von einem eNodeB in einem orthogonalen Frequenzmultiplex, OFDM, -Symbol eines Unterrahmens empfangen wird, wobei eine Vielzahl von BRS-Antennenports, APs, verwendet wird, um das BRS an das UE in dem OFDM-Symbol zu übertragen; und Dekodieren, an dem UE, eines erweiterten Physical Broadcast Channel, xPBCH, der von dem eNodeB in dem OFDM-Symbol empfangen wird, wobei der xPBCH, der BRS, ein primäres Synchronisationssignal, PSS, ein sekundäres Synchronisationssignal, SSS, und ein erweitertes Synchronisationssignal, ESS, in dem Unterrahmen gemultiplext werden, wobei der xPBCH und der BRS in dem OFDM-Symbol gemultiplext werden.

**Revendications**

**1.** Un appareil pour l'utilisation dans un eNB utilisable pour réaliser des attributions de ressource pour des transmissions de signal de référence à formation de faisceau, BRS, à l'intérieur d'un système de communication sans fil 5G, l'appareil comprenant un ou plusieurs processeurs et une mémoire configurés pour :

identifier, au niveau de l'eNB, une pluralité de ports d'antenne, AP, BRS associés à un symbole de multiplexage par répartition en fréquences orthogonales, OFDM, dans lequel des AP BRS sont utilisés pour transmettre un BRS de l'eNB à un équipement utilisateur, UE, dans le symbole OFDM ; coder, au niveau de l'eNB, un canal physique de broadcast amélioré, xPBCH, et multiplexer, au niveau de l'eNB, le xPBCH, le BRS, un signal de synchronisation primaire, PSS, un signal de synchronisation secondaire, SSS, et un signal de synchronisation amélioré, ESS, dans le symbole OFDM d'une manière par multiplexage par répartition en fréquence, FDM, et/ou par multiplexage par répartition de code, CDM, pour une transmission à l'UE.

**2.** L'appareil selon la revendication 1, comprenant en outre un émetteur-récepteur configuré pour :

transmettre, à l'UE, le BRS en utilisant la pluralité d'AP BRS associés au symbole OFDM ; et transmettre, à l'UE, le xPBCH dans le symbole OFDM, dans lequel le xPBCH est multiplexé avec le BRS dans le symbole OFDM.

**3.** L'appareil selon la revendication 1, dans lequel le BRS facilite la détermination par l'UE d'une direction de faisceau particulière pointée vers l'UE.

**4.** L'appareil selon la revendication 1, dans lequel l'ESS inclut une information sur un nombre d'AP BRS associés au symbole OFDM.

**5.** L'appareil selon la revendication 1, dans lequel l'ESS inclut une information concernant une relation entre des ports d'antenne, AP, de transmission, Tx, appliqués sur le xPBCH et le BRS.

**6.** L'appareil selon la revendication 1, dans lequel des éléments de ressource, RE, sont inutilisés pour un nombre d'AP BRS égal à ($K_{max}$ - K) quand K < $K_{max}$ et les AP BRS sont multiplexés en utilisant un multiplexage par répartition en fréquence, FDM, ou un multiplexage par répartition de code, CDM, dans lequel $K_{max}$ est un nombre maximal d'AP BRS disponibles pour la transmission du BRS dans le symbole OFDM et K est un nombre effectif d'AP BRS utilisés pour la transmission du BRS.

**7.** L'appareil selon la revendication 1, dans lequel les un ou plusieurs processeurs et une mémoire sont configurés en outre pour :

- appliquer un code de couverture orthogonal, OCC, avec une longueur de $K_{max}$ pour les AP BRS quand les AP BRS sont multiplexés en utilisant un multiplexage par répartition de code, CDM, dans lequel $K_{max}$ est un nombre maximal d'AP BRS disponibles pour la transmission du BRS dans le symbole OFDM ; ou

- appliquer un code de couverture orthogonal, OCC, avec une longueur de 8 pour les AP BRS quand les AP BRS sont multiplexés en utilisant un multiplexage par répartition de code, CDM, ou

- organiser un groupe d'AP BRS dans un premier sous-groupe d'AP BRS et un second sous-groupe d'AP BRS, dans lequel un code de couverture orthogonal, OCC, avec une longueur de 4 est appliqué au premier sous-groupe d'AP BRS et au second sous-groupe d'AP BRS, dans lequel une combinaison de multiplexage par répartition de code, CDM, et de multiplexage par répartition en fréquence, FDM, est appliquée pour le groupe d'AP BRS, ou

- organiser un groupe d'AP BRS dans quatre sous-groupes d'AP BRS, dans lequel un code de couverture orthogonal, OCC, avec une longueur de 2 est appliqué à chaque sous-groupe d'AP BRS, dans lequel une combinaison de multiplexage par répartition de code, CDM, et de multiplexage par répartition en fréquence, FDM, est appliquée pour le groupe d'AP BRS.

8. L'appareil selon la revendication 1, dans lequel les un ou plusieurs processeurs et une mémoire sont configurés en outre pour : initialiser une séquence de brouillage pour une transmission du xPBCH, dans lequel la séquence de brouillage est une fonction d'un identifiant, ID, de cellule physique et d'un indice de symbole, dans lequel une valeur de départ de brouillage pour la séquence de brouillage est définie comme : $c_{init} = f\!\left(N_{cell}^{ID}, n_{sym}\right)$ , dans lequel $N_{cell}^{ID}$ est l'ID de cellule physique, $n_{sym}$ est l'indice de symbole et f est une fonction de l'ID de cellule physique et de l'indice de symbole.

9. L'appareil selon la revendication 8, dans lequel la valeur de départ de brouillage est définie comme :

$$c_{init} = \left(n_{sym} + 1\right) \cdot \left(2N_{cell}^{ID} + 1\right).$$

10. Un appareil d'un équipement utilisateur, UE, utilisable pour traiter des signaux de référence à formation de faisceau, BRS, à l'intérieur d'un système de communication sans fil 5G, l'appareil comprenant un ou plusieurs processeurs et une mémoire configurés pour :

détecter, au niveau de l'UE, un BRS reçu à partir d'un eNB dans un symbole de multiplexage par répartition en fréquences orthogonales, OFDM, d'une sous-trame, dans lequel une pluralité de ports d'antenne, AP, de BRS sont utilisés pour transmettre le BRS à l'UE dans le symbole OFDM ; et

décoder, au niveau de l'UE, un canal physique de broadcast amélioré, xPBCH, reçu à partir de l'eNB dans le symbole OFDM, dans lequel le xPBCH, le BRS, un signal de synchronisation primaire, PSS, un signal de synchronisation secondaire, SSS, et un signal de synchronisation amélioré, ESS, sont multiplexés dans le symbole OFDM d'une manière par multiplexage par répartition en fréquence, FDM, et/ou par multiplexage par répartition de code, CDM.

11. L'appareil selon la revendication 10, comprenant en outre un émetteur-récepteur configuré pour :

recevoir, à partir de l'eNB, le BRS dans le symbole OFDM en utilisant la pluralité d'AP BRS ; et
recevoir, à partir de l'eNB, le xPBCH multiplexé avec le BRS dans le symbole OFDM.

12. L'appareil selon la revendication 10 ou 11, dans lequel l'ESS inclut une information sur un nombre d'AP BRS associés au symbole OFDM.

13. L'appareil selon une des revendications 10 à 12, dans lequel une séquence de brouillage est initialisée pour une réception du xPBCH au niveau de l'UE, dans lequel la séquence de brouillage est une fonction d'un identifiant, ID, de cellule physique et d'un indice de symbole, dans lequel une valeur de départ de brouillage pour la séquence de brouillage est définie comme : $c_{init} = f\!\left(N_{cell}^{ID}, n_{sym}\right)$ dans lequel $N_{cell}^{ID}$ est l'ID de cellule physique, $n_{sym}$ est l'indice de symbole et f est une fonction de l'ID de cellule physique et de l'indice de symbole.

14. Au moins un support de stockage lisible par machine ayant des instructions incorporées qui, quand elles sont exécutées par un ou plusieurs processeurs d'un eNB, amènent l'eNB à réaliser des attributions de ressource pour des transmissions de signal de référence à formation de faisceau, BRS, à l'intérieur d'un système de communication sans fil 5G par :

l'identification d'une pluralité de ports d'antenne, AP, BRS associés à un symbole de multiplexage par répartition en fréquences orthogonales, OFDM, dans lequel les AP BRS sont utilisés pour transmettre un BRS de l'eNB à un équipement utilisateur, UE, dans le symbole OFDM ;
le codage d'un canal physique de broadcast amélioré, xPBCH, et
le multiplexage du xPBCH, du BRS, d'un signal de synchronisation primaire, PSS, d'un signal de synchronisation secondaire, SSS, et d'un signal de synchronisation amélioré, ESS, dans le symbole OFDM d'une manière par multiplexage par répartition en fréquence, FDM, et/ou par multiplexage par répartition de code, CDM.

15. Au moins un support de stockage lisible par machine ayant des instructions incorporées qui, quand elles sont exécutées par un ou plusieurs processeurs d'un équipement utilisateur, UE, amènent l'UE à traiter des signaux de référence à formation de faisceau, BRS, à l'intérieur d'un système de communication sans fil 5G, par :

la détection, au niveau de l'UE, d'un BRS reçu à partir d'un eNB dans un symbole de multiplexage par répartition en fréquences orthogonales, OFDM, d'une sous-trame, dans lequel une pluralité de ports d'antenne, AP, de BRS sont utilisés pour transmettre le BRS à l'UE dans le symbole OFDM ; et
le décodage, au niveau de l'UE, d'un canal physique de broadcast amélioré, xPBCH, reçu à partir de l'eNB dans le symbole OFDM, dans lequel le xPBCH, le BRS, un signal de synchronisation primaire, PSS, un signal de synchronisation secondaire, SSS, et un signal de synchronisation amélioré, ESS, sont multiplexés dans ladite sous-trame, dans lequel le xPBCH et le BRS sont multiplexés dans le symbole OFDM.

FIG. 1

| Antenna port $p$ | $[w_p(0), w_p(1), \cdots, w_p(7)]$ |
|---|---|
| 0 | [1  1  1  1  1  1  1  1] |
| 1 | [1  -1  1  -1  1  -1  1  -1] |
| 2 | [1  1  -1  -1  1  1  -1  -1] |
| 3 | [1  -1  -1  1  1  -1  -1  1] |
| 4 | [1  1  1  1  -1  -1  -1  -1] |
| 5 | [1  -1  1  -1  -1  1  -1  1] |
| 6 | [1  1  -1  -1  -1  -1  1  1] |
| 7 | [1  -1  -1  1  -1  1  1  -1] |

# FIG. 2A

| Antenna port $p$ | $[w_p(0), w_p(1), \cdots, w_p(4)]$ |
|---|---|
| 0 | [1  1  1  1] |
| 1 | [1  -1  1  -1] |
| 2 | [1  1  -1  -1] |
| 3 | [1  -1  -1  1] |

# FIG. 2B

xPBCH

BRS

Interleaved xPBCH
and BRS

ESS

PSS

SSS

0    BRS: AP 0

1    BRS: AP 1

2    BRS: AP 2

3    BRS: AP 3

4    BRS: AP 4

5    BRS: AP 5

6    BRS: AP 6

7    BRS: AP 7

xPBCH

FIG. 3

**2PRB**

| | |
|---|---|
| 0 | BRS: AP 0 |
| 1 | BRS: AP 1 |
| 2 | BRS: AP 2 |
| 3 | BRS: AP 3 |
| | xPBCH |
| | Unused |

FIG. 4

2PRB

BRS: AP 0-7

xPBCH

FIG. 5

**16 REs**

| | |
|---|---|
| 0 | BRS: AP 0 |
| 1 | BRS: AP 1 |
| 2 | BRS: AP 2 |
| 3 | BRS: AP 3 |
| 4 | BRS: AP 4 |
| 5 | BRS: AP 5 |
| 6 | BRS: AP 6 |
| 7 | BRS: AP 7 |
| | xPBCH |

FIG. 6

**20REs**

BRS: AP 0, 2, 4, 6

BRS: AP 1, 3, 5, 7

xPBCH

FIG. 7

**2PRB**

BRS: AP {0,1}

BRS: AP {2,3}

BRS: AP {4,5}

BRS: AP {6,7}

xPBCH

FIG. 8

900

Identify, at the eNodeB, a plurality of beamformed antenna ports (APs) associated with one orthogonal frequency division multiplexing (OFDM) symbol, wherein the beamformed APs are used to transmit a BRS from the eNodeB to a user equipment (UE) in the OFDM symbol

910

Encode, at the eNodeB, an enhanced physical broadcast channel (xPBCH)

920

Multiplex, at the eNodeB, the xPBCH with the BRS in the OFDM symbol for transmission to the UE

930

FIG. 9

1000

Detect, at the UE, a BRS received from an eNodeB
in one orthogonal frequency division multiplexing
(OFDM) symbol, wherein a plurality of beamformed
antenna ports (APs) are used to transmit the BRS to
the UE in the OFDM symbol

1010

Decode, at the UE, an enhanced physical broadcast
channel (xPBCH) received from the eNodeB in the
OFDM symbol, wherein the xPBCH is multiplexed
with the BRS in the OFDM symbol

1020

FIG. 10

1100 ⟋

Identifying, using one or more processors at the eNodeB, a plurality of beamformed antenna ports (APs) associated with an orthogonal frequency division multiplexing (OFDM) symbol, wherein the beamformed APs are used to transmit a BRS from the eNodeB to a user equipment (UE) in the OFDM symbol ⟋ 1110

Encoding, using one or more processors at the eNodeB, an enhanced physical broadcast channel (xPBCH) ⟋ 1120

Multiplexing, using one or more processors at the eNodeB, the xPBCH with the BRS in the OFDM symbol for transmission to the UE ⟋ 1130

FIG. 11

FIG. 12

Mobile
Device

Multiple
Antennas

Speaker

Wireless
Modem

Non-Volatile
Memory Port

Liquid Crystal Display
(LCD) Screen and/or
Touch Screen Display

Speaker

Application
Processor

Graphics
Processor

Storage
Medium

Internal
Memory

Keyboard

Microphone

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140301353 A1
- US 20140204851 A1
- US 20150103800 A1